# EUROPÄISCHE PATENTSCHRIFT

(11) **EP 0 888 958 B1**
(45) Veröffentlichungstag und Bekanntmachung des Hinweises auf die Patenterteilung: **13.08.2003**
(21) Anmeldenummer: 98108503.8
(22) Anmeldetag: 11.05.1998
(51) Int. Cl.: B62J 1/18, A45F 4/02

(54) **Abnehmbare Sitzbankverkleidung für ein Motorrad**
Detachable cover for the rear seat of a motorbike
Revêtement amovible pour un selle d'une moto

(30) Priorität: 01.07.1997 DE 19727909
(43) Veröffentlichungstag der Anmeldung: 07.01.1999
(73) Patentinhaber: Bayerische Motoren Werke Aktiengesellschaft, 80788 München (DE)
(72) Erfinder: Heinrich, Edgar, 85356 Freising (DE); Robb, David, 81245 München (DE); Greger, Martin, 85757 Karlsfeld (DE)

(56) Entgegenhaltungen:
- DE-A- 3 831 791
- DE-U- 8 517 062
- DE-U- 9 201 550
- US-A- 4 258 869
- US-A- 4 953 911

## Beschreibung

Die Erfindung betrifft eine abnehmbare Sitzbankverkleidung für den hinteren Teil einer Motorradsitzbank.

Aus der US 4 258 869 ist eine Satteltasche bekannt, die zum Beispiel auf eine Motorradsitzbank aufsetzbar ist. Die Satteltasche kann durch eine Person auf der Schulter getragen werden.

Es ist bereits bekannt, bei Motorrädern, insbesondere bei für Soziusbetrieb geeigneten Sportmotorrädern, die Motorradsitzbank so zu gestalten, daß der Soziussitzplatz durch eine abnehmbare Sitzbankverkleidung abgedeckt werden kann. Dies geschieht zum Beispiel aus Gründen der besseren Aerodynamik. Eine solche an- und abmontierbare Sitzbankverkleidung wird mit üblichen Befestigungsmitteln zum Beispiel am Heck bzw. an der Sitzbank des Motorrads angebracht. Das Motorrad wird entweder mit oder ohne Sitzbankverkleidung benutzt, da für Soziusbetrieb keine spezielle Halterung für die Sitzbankverkleidung am Fahrzeug vorgesehen ist.

Außerdem ist bekannt, einen Gepäckbehälter auf der Soziussitzbank anzubringen. Das deutsche Gebrauchsmuster G 84 05 268 beschreibt einen solchen Gepäckbehälter, der lösbar auf der Soziussitzbank befestigt werden kann.

In beiden Fällen ist es nun schwierig, eine zweite Person als Sozius auf dem Motorrad zu befördern und gleichzeitig die abgenommene Sitzbankverkleidung bzw. den abgenommenen Gepäckbehälter nicht zurückzulassen, sondern ebenfalls mitzunehmen.

Aus diesem Grund hat die Erfindung die Aufgabe, eine abnehmbare Sitzbankverkleidung so zu gestalten, daß sie in abgenommenem Zustand einfach transportiert werden kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist die Sitzbankverkleidung mit einer Trageeinrichtung verbunden, die ein Umhängen um einen menschlichen Körper ermöglicht. Das hat den Vorteil, daß die Sitzbankverkleidung im abgenommenen Zustand bei einem von zwei Personen besetzten Motorrad trotzdem einfach transportiert werden kann.

Bei der Erfindung ist die Trageeinrichtung ein Rucksack. In diesem kann vorteilhafterweise noch weiteres Gepäck verstaut werden und Rucksacktrageeinrichtungen sind so gestaltet, daß sie am menschlichen Körper bequem und sicher gegen Verlieren getragen werden können.

Ist bei einer bevorzugten Ausführung der Erfindung die Trageeinrichtung von der Sitzbankverkleidung trennbar, so kann der Rucksack als Gepäckunterbringungsmöglichkeit auch genutzt werden, wenn die Sitzbankverkleidung bei Solobetrieb an der Motorradsitzbank montiert ist, der Fahrer jedoch Gepäck im Rucksack befördern möchte.

Eine vorteilhafte Ausführung der Erfindung zeichnet sich dadurch aus, daß sich die Trageeinrichtung bei an der Motorradsitzbank befestigter Sitzbankverkleidung in einem Hohlraum zwischen Motorradsitzbank und Sitzbankverkleidung befindet. Auf diese Weise ist die Trageeinrichtung unsichtbar und sicher am Fahrzeug verstaut.

Bei einer weiteren vorteilhaften Ausführung der Erfindung ist die Sitzbankverkleidung so geformt, daß sie im umgehängten Zustand als Protektor für ein Körperteil wirkt. Das hat den Vorteil, daß die Sitzbankverkleidung, wenn sie mit der Trageeinrichtung am Körper getragen wird, bei sicherheitsgerechter Auslegung einen zusätzlichen Schutz bietet. So kann die Sitzbankverkleidung zum Beispiel aus Rückenprotektormaterial bestehen und so umhängbar sein, daß eine optimale Schutzfunktion gewährleistet ist.

Ein bevorzugtes Ausführungsbeispiel der Erfindung beschreibt die nachfolgende Beschreibung mit der zugehörigen Zeichnung. Es zeigen:
- Figur 1: den hinteren Teil eines Motorrades mit einer Sitzbankverkleidung,
- Figur 2: einen seitenverkehrt und vergrößert gezeichneten Teilschnitt des Motorrades aus Figur 1 im Bereich der Sitzbankverkleidung und
- Figur 3: die vom Motorrad abgenommene Sitzbankverkleidung mit ihrer Trageeinrichtung.

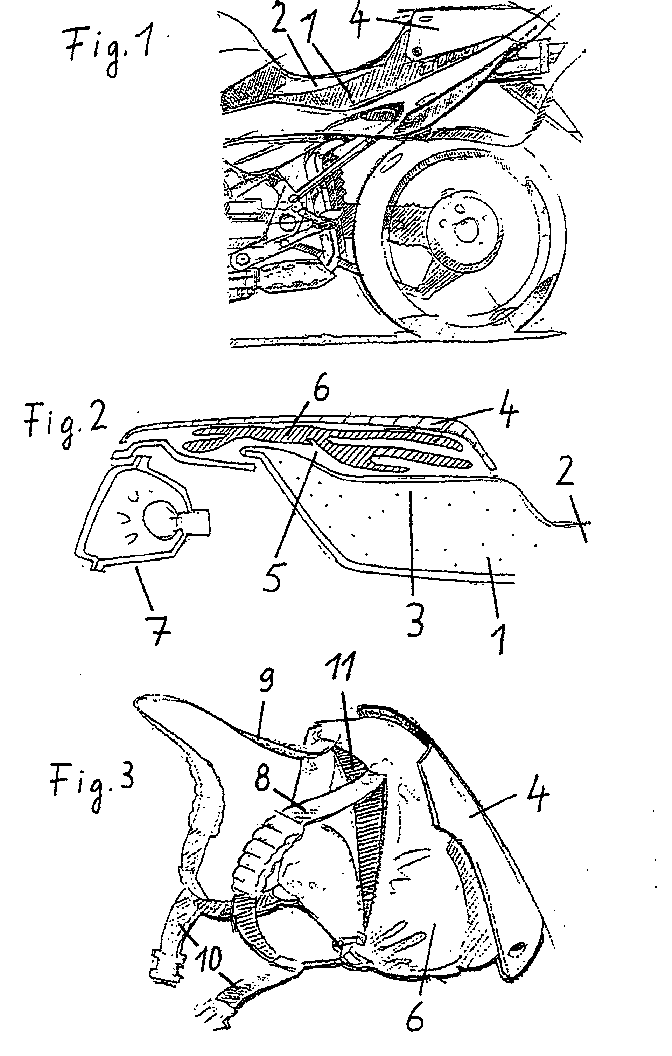

Nach Figur 1 ist eine Motorradsitzbank 1 vorgesehen mit einem Sitzbereich 2 für einen Fahrer und einem weiteren Sitzbereich 3 (Figur 2) für einen Sozius. Dieser weitere Sitzbereich 3 für den Sozius wird abgedeckt durch eine Sitzbankverkleidung 4, die mit nicht weiter dargestellten üblichen Befestigungsmitteln an der Motorradsitzbank 1 und/oder an anderen fahrzeugfesten Teilen des Motorrads angebracht ist. In einem Hohlraum 5, zwischen der Sitzbankverkleidung 4 und dem weiteren Sitzbereich 3 für den Sozius, ist zusammengefaltet ein Rucksack 6 untergebracht, an dessen Außenseite die Sitzbankverkleidung 4 mit nicht näher dargestellten, konventionellen Befestigungsmitteln angebracht ist. Dies ist in Figur 2 dargestellt, aus der auch hervorgeht, daß sich die Sitzbankverkleidung 4 bis über den weiteren Sitzbereich 3 für den Sozius nach hinten hinauserstreckt, in den Bereich einer Heckleuchte 7.

Figur 3 zeigt die von der Motorradsitzbank 1 entfernte Sitzbankverkleidung 4, an der Außenseite des Rucksacks 6 befestigt. Der Rucksack 6 ist ausgefaltet und besitzt zwei Schultertragegurte 8, 9 und einen geteilten Bauchgurt 10 zur sicheren Befestigung am nicht gezeichneten Körper des nicht gezeichneten Fahrers oder des nicht gezeichneten Sozius. Zusätzlich besitzt der Rucksack 6 noch eine verschließbare Öffnung 11 zum Unterbringen von nicht gezeichnetem Gepäck. Ist die Sitzbankverkleidung 4 entsprechend ausgelegt, sowohl bezüglich ihrer Form, als auch bezüglich ihres Materials, erfüllt sie auch die Funktion eines Rückenprotektors.

## Patentansprüche

1. Abnehmbare Komponente (4) für einen hinteren Teil einer Motorradsitzbank (1), wobei die abnehmbare Komponente (4) mit einer Trageeinrichtung verbunden ist, die ein Umhängen der abnehmbaren Komponente (4) um einen menschlichen Körper ermöglicht, **dadurch gekennzeichnet, dass** die abnehmbare Komponente (4) eine abnehmbare Sitzbankverkleidung ist und dass die Trageeinrichtung ein Rucksack (6) ist.

2. Sitzbankverkleidung (4) nach Anspruch 1, **dadurch gekennzeichnet, dass** die Trageeinrichtung von der Sitzbankverkleidung (4) trennbar ist.

3. Sitzbankverkleidung (4) nach einem der Ansprüche 1 bis 2, **dadurch gekennzeichnet, dass** sich die Trageeinrichtung bei an der Motorradsitzbank (1) angebrachter Sitzbankverkleidung (4) in einem Hohlraum (5) zwischen der Motorradsitzbank (1) und der Sitzbankverkleidung (4) befindet.

4. Sitzbankverkleidung (4) nach einem der Ansprüche 1 bis 3, **dadurch gekennzeichnet, dass** die Sitzbankverkleidung (4) so geformt und/oder so umhängbar ist, dass sie im umgehängten Zustand als Protektor für ein Körperteil wirkt.

## Claims

1. A removable component (4) for a rear part of a motorcycle seat (1), wherein the removable component (4) is connected to a carrying device for slinging the removable component (4) around a human body, **characterised in that** the removable component (4) is a removable seat cover and the carrying device is a rucksack (6).

2. A seat cover (4) according to claim 1, **characterised in that** the carrying device is removable from the seat cover (4).

3. A seat cover (4) according to claim 1 or claim 2, **characterised in that** when the seat cover (4) is fitted on the motorcycle seat (1), the carrying device is disposed in a cavity (5) between the seat (1) and the cover (4).

4. A seat cover (4) according to any of claims 1 to 3, **characterised in that** the seat cover (4) is so shaped and/or so slingable that in the slung state it acts as a protector for part of the body.

## Revendications

1. Elément amovible (4) pour une partie arrière d'une selle de moto (1), l'élément (4) étant lié à un système porteur qui permet d'accrocher cet élément (4) à un corps humain,
**caractérisé en ce que**
l'élément amovible (4) est un revêtement amovible de selle et que le système porteur est un sac à dos (6).

2. Revêtement de selle (4) selon la revendication 1,
**caractérisé en ce que**
le système porteur peut être séparé du revêtement (4).

3. Revêtement de selle (4) selon l'une des revendications 1 ou 2,
**caractérisé en ce que**
lorsque le revêtement (4) est mis en place sur la selle (1) de la moto, le système porteur se trouve dans un espace creux (5) entre la selle (1) et le revêtement (4).

4. Revêtement de selle (4) selon l'une des revendications 1 à 3,
**caractérisé en ce que**
le revêtement (4) est configuré de telle sorte et/ou peut être accroché à un corps humain de telle sorte que, lorsqu'il est accroché, il sert de protection pour une partie du corps.
